# EUROPEAN PATENT APPLICATION

(11) **EP 1 395 046 A1**
(43) Date of publication of application: **03.03.2004**
(21) Application number: 02292097.9
(22) Date of filing: 26.08.2002
(51) Int. Cl.: H04N 5/45, H04N 5/445, H04N 5/76

(54) **Method for previewing stored video recordings in a personal video recorder or a DVD recorder**

(71) Applicant: Thomson Licensing S.A., 92648 Boulogne Cedex (FR)
(72) Inventor: Barron, Steve, 738243, Republic of Singapore (SG)
(74) Representative: Rossmanith, Manfred, Dr.

(57) **Abstract**

The invention allows a user to browse the actual video recordings in full motion in a scaled down window inside a menu list of recordings. Every time a title is highlighted in the list by a cursor, the video recording associated with that title starts playing in the scaled down window. The moving pictures in full motion gives much more information than a still picture, or also an additional information together with a title, for quickly determining the video content that was recorded. The video will continue to play until the user moves the cursor to another title in the list. At that point the newly highlighted title will begin to play in the window.

## Description

### Background of the invention

When a user has a multitude of video recordings on a hard disk drive (HDD) or a similar recording device, for example a DVD recordable drive, it is difficult to determine quickly the content of the listed videos. Appliances of this kind have not the possibility to input a descriptive title as it is known for example from personal computers, which allow to input a descriptive title for text documents and other files.

It is the object of the present invention, to specify an appliance as described above which provides a better control of the appliance for a user.

### Invention

This object is achieved by means of the invention as specified in claim 1. Advantageous developments of the invention are disclosed in the subclaims.

The invention allows a user to browse the actual video recordings in full motion in a scaled down window inside a menu list of recordings. Every time a title is highlighted in the list by a cursor, the video recording associated with that title starts playing in the scaled down window. The moving pictures in full motion gives much more information than a still picture, or also an additional information together with a title, for quickly determining the video content that was recorded. The video will continue to play until the user moves the cursor to another title in the list. At that point the newly highlighted title will begin to play in the window.

A preferred embodiment of the invention is explained in more detail with regard to a schematic figure, which shows
- Fig.: Television display with a video file list according to the invention.

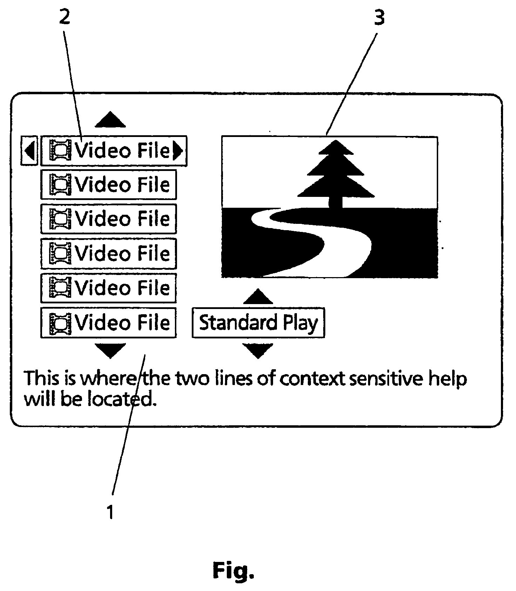

As shown in the Figure, the on-screen display of a personal video recorder, as displayed on the display of a television set coupled to the personal video recorder, is divided in at least two parts. A first part 1 shows the file list of video recordings and is arranged at the left side of the display. The video recordings can be selected with a cursor 2, which highlights the selected video recording. The cursor 2 can be moved up and down by a user with a remote control to select a wanted video recording.

On the right side of the television display the video content of a selected video recording is displayed in a window 3. Therefore, when a user moves down the cursor 2 and selects another video recording, the content of this video recording will be shown on the right side of the display. When a video recording is selected, the video is starting from the beginning. When the user moves the cursor further, he will see the next video recording, as selected, in the window 3.

Therefore, a user gets rapidly an overview over the video recordings of the list. The invention is in particular applicable to DVD recorders or personal video recorders, which provide digital video recordings on a hard disc, an optical storage medium or a similar recording device.

## Claims

1. Appliance comprising a circuit for providing recording and replaying of video recordings on a storage media, and comprising further an on-screen display circuit for a display on an associated display device, for example a television set, **characterized in that** the appliance comprises an operating mode, which shows in an on-screen display a list of video files (1), which are selectable by a cursor (2), and in a scaled down window (3) the video content of the selected video file.

2. Appliance according to claim 1, **characterized in that** each time, when the cursor (2) is moved to a further video file, the video content of the further video file is starting from the beginning in full motion.

3. Appliance according to claim 1 or 2, **characterized in that** the cursor (2) is movable upwards and downwards in the video file list by a user with a remote control.

4. Appliance according to claims 1, 2 or 3, **characterized in that** the appliance is a digital video recorder for recording of videos on a Hard Disk Drive or an optical storage medium, for example a recordable DVD.
